Europäisches Patentamt

European Patent Office

Office européen des brevets

(19)

(11) Numéro de publication : **0 432 061 A1**

(12) **DEMANDE DE BREVET EUROPEEN**

(21) Numéro de dépôt : 90420518.4

(22) Date de dépôt : 30.11.90

(51) Int. Cl.⁵ : **A01N 25/04**

(30) Priorité : 04.12.89 FR 8915955

(43) Date de publication de la demande :
12.06.91 Bulletin 91/24

(84) Etats contractants désignés :
AT BE CH DE DK ES FR GB GR IT LI LU NL SE

(71) Demandeur : RHONE-POULENC CHIMIE
25, quai Paul Doumer
F-92408 Courbevoie Cédex (FR)

(72) Inventeur : Fiard, Jean-François
16, rue des Orteaux
F-75020 Paris (FR)
Inventeur : Prevotat, Marie-Luce
39, rue Blomet
F-75015 Paris (FR)

(74) Mandataire : Vignally, Noel et al
Rhône-Poulenc Chimie Service Brevets
Chimie Centre de Recherches des Carrières
B.P. 62
F-69192 Saint-Fons Cédex (FR)

(54) Emulsions aqueuses concentrées de matières actives phytosanitaires à bas point de fusion et leur application dans les formulations phytosanitaires.

(57) Emulsions aqueuses concentrées comprenant une phase organique dispersée constituée d'au moins une matière active phytosanitaire de bas point de fusion, d'au moins un solvant de la matière active susceptible de maintenir la matière active à l'état liquide après fusion, et éventuellement un agent tensio-actif soluble dans la matière active fondue, un émulsifiant non-ionique et/ou anionique et de l'eau.

EP 0 432 061 A1

Jouve, 18, rue Saint-Denis, 75001 PARIS

# EMULSIONS AQUEUSES CONCENTREES DE MATIERES ACTIVES PHYTOSANITAIRES A BAS POINT DE FUSION ET LEUR APPLICATION DANS LES FORMULATIONS PHYTOSANITAIRES

La présente invention a pour objet des émulsions aqueuses concentrées de matières actives phytosanitaires à bas point de fusion, leur procédé de préparation et leur application dans les formulations phytosanitaires.

Les matières actives phytosanitaires de bas point de fusion sont généralement commercialisées sous forme de solutions concentrées émulsionnables ; de telles formulations nécessitent de grandes quantités de solvants, ce qui pose des problèmes de toxicologie et d'écotoxicologie. Les émulsions aqueuses concentrées de matières actives phytosanitaires de bas point de fusion, faisant l'objet de l'invention, permettent de limiter grandement ces problèmes.

Selon l'invention il s'agit d'émulsions aqueuses concentrées, comprenant :
- de l'ordre de 50 à 600 g, de préférence de l'ordre de 100 à 600 g d'une phase organique dispersée constituée d'au moins une matière active phytosanitaire de bas point de fusion, d'au moins un solvant de la matière active susceptible de maintenir la matière active à l'état liquide après fusion, le rapport pondéral matière active/solvant étant de l'ordre de 95/5 à 60/40 et éventuellement un agent tensio-actif soluble dans la matière active fondue selon un rapport pondéral agent tensio-actif soluble/solvant de l'ordre de 0 à 1, de préférence de l'ordre de 20/80 à 50/50 ;
- de 20 à 120 g, de préférence de l'ordre de 40 à 80 g d'au moins un émulsifiant non-ionique et/ou anionique ;
- et le complément à 1 litre d'eau.

On entend par matières actives phytosanitaires de bas point de fusion, les insecticides, fongicides, herbicides ou autres pesticides dont le point de fusion est inférieur à 50°C.

A titre d'exemples, on peut citer :
- l'alachlor
- le bromoxynil octanoate ou heptanoate
- le prochloraz
- la perméthrine
- le chloropyrifos méthyle
- le phospholane
- le tri-allate
- le tridiphane
- le diméthachlor
- le chloropropham.

Parmi les solvants des matières organiques pouvant maintenir celles-ci à l'état liquide (en surfusion) après fusion on peut citer les solvants aromatiques (tels que benzène, xylènes, toluène), les coupes pétrolières aromatiques, les phtalates de dialkyle, le phtalate de 2-diéthylhexyle, le dichlorométhane, le trichlorométhane, le 1,2-dichloroéthane, l'isophorone.

Parmi les agents tensio-actifs solubles dans la matière active éventuellement présents pour maintenir la matière organique à l'état liquide (par dissolution dans la matière organique fondue) on peut citer les agents non-ioniques tels que les di- ou tri-styrylphénols alcoxylés, les alkylphénols alcoxylés, les amines grasses alcoxylées, les alcools gras alcoxylés, les triglycérides (par exemple huile de ricin) alcoxylés, choisis parmi ceux dont le HLB est inférieur à 13.

Pour la définition du HLB (balance hydrophilie-lipophilie) on peut se référer à l'ouvrage KIRK OTHMER ENCYCLOPEDIA OF CHEMICAL TECHNOLOGY, 3ème édition, volume 8 p. 910-912.

Parmi les agents émulsifiants non-ioniques présents dans l'émulsion, on peut citer les di- ou tri-styrylphénols alcoxylés, les alkylphénols alcoxylés, les amines grasses alcoxylées, les alcools gras alcoxylés, les triglycérides (par exemple huile de ricin) alcoxylés, dont le HLB est inférieur ou égal à 17 et de préférence inférieur ou égal à 16.

Parmi les agents émulsifiants anioniques présents dans l'émulsion, on peut citer les di- ou tri-styrylphénols alcoxylés phosphatés, les alkylphénols alcoxylés sulfatés, sulfonés ou phosphatés, les alcools gras alcoxylés sulfatés ou phosphatés, sous forme acide ou neutralisée, le dodécylbenzène sulfonate de sodium dont le HLB est inférieur ou égal à 17 et de préférence inférieur ou égal à 16.

A côté de ces constituants principaux peuvent être présents :
- un anti-gel
- un anti-mousse (polysiloxanes par exemple)
- un agent mouillant
- un agent épaississant
- et des additifs auxiliaires

Parmi les agents mouillants pouvant éventuellement être présents, on peut citer :
- les savons de métaux alcalins tels que les sels de sodium ou de potassium d'acides gras saturés ou insaturés en $C_8$-$C_{24}$, le N-lauryl sarcosinate de sodium, le N-acylsarcosinate de sodium ;
- les sulfonates alcalins tels que les alkylsulfonates du type diéthylhexylsulfosuccinate de sodium ; les alkylbenzène sulfonates du type nonyl - ou dodécyl-benzènesulfonates de sodium, de diéthanolamine, de triéthanolamine ou de N-méthylcyclohexylamine ; les alkylnaphtalène sulfonates alcalins ; les N-alkyltaurates alcalins ;
- les sulfates et les produits sulfatés tels que les alkylsulfates alcalins du type laurysulfate de sodium ; les alcools gras polyoxyéthylénés et sulfatés ; les alkylphénols polyoxyéthylénés et sulfatés.

Des anti-gels conventionnels tels que l'éthylène glycol, le propylène glycol, le glycérol, le diéthylène glycol, le triéthylène glycol, le tétraéthylène glycol, l'urée, peuvent être utilisés.

Des agents épaississants organiques hydrosolubles ou susceptibles de gonfler dans l'eau, tels que les polysaccharides du type gomme xanthane, les alginates, les méthylcelluloses carboxylées ou hydroxylées, les macromolécules synthétiques du type polyacrylates, polymaléates, polyvinylpyrrolidones, polyéthylène glycols, alcools polyvinyliques, ou non-organiques tels que les bentonites, les silices, peuvent être utilisés.

Les additifs auxilliaires pouvant être présents sont des agents protecteurs vis-à-vis de l'oxydation, des rayons UV ou des variations de pH, des colorants, des bactéricides.

Les proportions des différents constituants des émulsions de l'invention sont généralement les suivantes :

- de 50 à 600 g/l, de préférence de 100 à 600 g/l, de phase organique dispersée
- de 20 à 120 g/l, de préférence de 40 à 80 g/l, d'émulsifiant
- de 8 à 200 g/l d'anti-gel
- de 0 à 100 g/l d'agent mouillant
- de 0 à 50 g/l d'épaississant
- et le complément à 1 litre d'eau

Les émulsions aqueuses concentrées faisant l'objet de l'invention peuvent être préparées par :

- mise en solution de la matière active fondue dans un de ses solvants
- addition de l'agent tensio-actif éventuel soluble dans la matière active et de l'émulsifiant
- introduction de l'eau par fraction ou en continu dans la phase organique dispersée ainsi obtenue, à l'aide d'un système d'agitation énergique, les quantités relatives des différents composants correspondant à celles données ci-dessus.

Tout système de mélangeage ou d'agitation énergique (à haut cisaillement) peut être mis en oeuvre, moulin à colloïdes, pompes à haute pression, agitateur à vibrations, appareil à ultra-sons, passage à travers des filières.

La nature des différents composants pouvant être mis en oeuvre a déjà été mentionnée ci-dessus.

Les émulsions aqueuses concentrées faisant l'objet de l'invention sont stables dans un domaine de température de l'ordre de -5°C à +45°C ; aucun phénomène de recristallisation au stockage n'a été constaté.

Elles sont particulièrement intéressantes en formulation phytosanitaire, car elles sont parfaitement compatibles avec les suspensions aqueuses concentrées (flowable) de matières phytosanitaires et peuvent ainsi former des suspo-émulsions stables.

Elles sont en outre bien placées sur le plan éco-toxicologique, puisque la quantité de solvant qu'elles renferment est très faible.

Les exemples suivants sont donnés à titre indicatif et ne peuvent être considérés comme une limite du domaine et de l'esprit de l'invention.

Exemple 1

On ajoute à 440 g d'alachlor fondu (liquide homogène) 126 g de diméthylphtalate ainsi que 63 g de SOPROPHOR BC 4® (nonylphénoléthoxylé de HLB = 8,8 commercialisé par RHONE-POULENC). On introduit ensuite 63 g de SOPROPHOR 678 P® (nonylphénol éthoxypropoxylé de HLB = 11 commercialisé par RHONE-POULENC).

Une émulsion est préparée dans un homogénéiseur ULTRA TURAX T 25® (commercialisé par PROLABO) par addition lente au mélange de 510 ml d'eau et de 60 ml de monoéthylene glycol, tamponné à pH 5,5. 3 g d'antimousse RHODORSIL 426 R® (commercialisé par RHONE-POULENC) sont également ajoutés au cours de cette opération. Celle-ci dure de l'ordre de 1 minute avec augmentation progressive de la vitesse d'agitation jusqu'à la vitesse maximum de 20.000 tours/minute.

En fin d'opération on introduit 40 g d'une solution à 2% en poids de RHODOPOL 23® (gomme xanthane commercialisée par RHONE-POULENC) pour stabiliser l'émulsion.

L'émulsion obtenue présente les caractéristiques suivantes :
- diamètre moyen : 0,6 micromètre
- stable dans une gamme de température de l'ordre de -5°C à +45°C
- pas de cristallisation au cours du temps.

Exemple 2

On réalise l'opération décrite à l'exemple 1 à partir de :
- 400 g d'alachlor fondu
- 94,5 g de diméthylphtalate
- 94,5 g de SOPROPHOR BC 4®
- 50 g de SOPROPHOR 678 P®
- 60 ml de monoéthylène glycol
- 3 g de RHODORSIL 426 R®
- 40 g de solution à 2% en poids de RHODOPOL 23®
- complément à 1 l d'eau tamponnée à pH 5,5.

L'émulsion obtenue présente les caractéristiques suivantes :
- diamètre moyen : 0,7 micromètre
- stable dans une gamme de température de l'ordre de -5°C à +45°C
- pas de cristallisation au cours du temps.

Exemple 3

On réalise l'opération décrite à l'exemple 1 à partir de :
- 440 g d'alachlor fondu
- 110 g de SOLVESSO 200® (coupe pétrolière aromatique commercialisée par ESSO)
- 40 g de SOPROPHOR 860 P® (alcool gras éthoxylé de HLB = 11 commercialisé par RHONE-POULENC)
- 40 g de SOPROPHOR 678 P®
- 60 ml de monoéthylène glycol
- 3 g de RHODORSIL 426 R®
- 40 g de solution à 2% en poids de RHODOPOL 23®
- complément à 1 l d'eau tamponnée à pH 5,5.

L'émulsion obtenue présente les caractéristiques suivantes :
- diamètre moyen : 0,68 micromètre
- stable dans une gamme de température de l'ordre de -5°C à +45°C
- pas de cristallisation au cours du temps.

Exemple 4

On répète l'opération décrite à l'exemple 1 à partir de :
- 400 g de prochloraz fondu
- 133 g de SOLVESSO 200®
- 15 g de SOPROPHOR 461 P® (nonylphénol éthopropoxylé de HLB = 12,3 commercialisé par RHONE-POULENC)
- 15 g de SOPROPHOR PA 23® (alkylpolyéthoxyéther phosphate sous forme acide de HLB = 12,3 commercialisé par RHONE-POULENC)
- 60 ml de monoéthylène glycol
- 3 g de RHODORSIL 426 R®
- 40 g de solution à 2% en poids de RHODOPOL 23®
- complément à 1 l d'eau tamponnée à pH 5,5.

L'émulsion obtenue présente les caractéristiques suivantes :
- diamètre moyen : 0,97 micromètre
- stable dans une gamme de température de l'ordre de -5°C à +45°C
- pas de cristallisation au cours du temps.

Exemple 5

On répète l'opération décrite à l'exemple 1 à partir de :
- 450 g de prochloraz fondu
- 150 g de SOLVESSO 200®
- 25 g de SOPROPHOR 461 P®
- 25 g de SOPROPHOR FL® (phosphate de tristyrylphénol éthoxylé neutralisé à la triethanolamine de HLB = 16 commercialisé par RHONE-POULENC)
- 60 ml de monoéthylène glycol
- 3 g de RHODORSIL 426 R®
- 40 g de solution à 2% en poids de RHODOPOL 23®
- complément à 1 l d'eau tamponnée à pH 5,5.

L'émulsion obtenue présente les caractéristiques suivantes :
- diamètre moyen : 0,67 micromètre
- stable dans une gamme de température de l'ordre de -5°C à +45°C
- pas de cristallisation au stockage.

Exemple 6

On répète l'opération décrite à l'exemple 1 à partir de :
- 250 g de bromoxynil octanoate fondu
- 167 g de SOLVESSO 150® (coupe pétrolière aromatique commercialisée par ESSO)
- 50 g de SOPROPHOR 461 P®
- 60 g de monoéthylène glycol
- 3 g de RHODORSIL 426 R®
- 60 g de solution à 2% en poids de RHODOPOL 23®
- complément à 1 l d'eau tamponnée à pH 5,5.

L'emulsion obtenue présente les caractéristiques suivantes :
- diamètre moyen : 1,3 micromètre
- stable dans une gamme de température de l'ordre de -5°C à +45°C
- pas de cristallisation au cours du temps.

Exemple 7

On répète l'opération décrite à l'exemple 1 à partir de :
- 400 g d'alachlor fondu
- 200 g de SOLVESSO 200®
- 60 g de SOPROPHOR 860 P®
- 40 g de SOPROPHOR 678 P®
- 60 ml de monoéthylène glycol
- 3 g de RHODORSIL 426 R®
- 40 g de solution à 2% en poids de RHODOPOL 23®
- complément à 1 l d'eau tamponnée à pH 5,5.

L'émulsion obtenue présente les caractéristiques suivantes :
- diamètre moyen : 0,9 micromètre
- stable dans une gamme de température de l'ordre de -5°C à +45°C
- pas de cristallisation au cours du temps.

Exemple 8

On répète l'opération décrite à l'exemple 1 à partir de :
- 400 g d'alachlor fondu
- 150 g de diméthylphtalate
- 80 g de SOPROPHOR BC 4®
- 50 g de SOPROPHOR 678 P®
- 60 ml de monoéthylène glycol

- 3 g de RHODORSIL 426 R®
- 40 g de solution à 2% en poids de RHODOPOL 23®
- complément à 1 l d'eau tamponnée à pH 5,5.

L'émulsion obtenue présente les caractéristiques suivantes :
- diamètre moyen : 0,85 micromètre
- stable dans une gamme de température de l'ordre de -5°C à +45°C
- pas de cristallisation au cours du temps.

**Revendications**

1. Emulsions aqueuses concentrées comprenant :
   - de l'ordre de 50 à 600 g d'une phase organique dispersée constituée d'au moins une matière active phytosanitaire de bas point de fusion, d'au moins un solvant de la matière active susceptible de maintenir la matière active à l'état liquide après fusion, le rapport pondéral matière active/solvant étant de l'ordre de 95/5 à 60/40 et éventuellement un agent tensio-actif soluble dans la matière active fondue selon un rapport pondéral agent tensio-actif soluble/solvant de l'ordre de 0 à 1
   - de 20 à 120 g d'au moins un émulsifiant non-ionique et/ou anionique
   - et le complément à 1 l d'eau.

2. Emulsions aqueuses concentrées selon la revendication 1 comprenant :
   - de l'ordre de 100 à 600 g d'une phase organique dispersée constituée d'au moins une matière active phytosanitaire de bas point de fusion, d'au moins un solvant de la matière active susceptible de maintenir la matière active à l'état liquide après fusion, le rapport pondéral matière active/solvant étant de l'ordre de 95/5 à 60/40 et un agent tensio-actif soluble dans la matière active fondue selon un rapport pondéral agent tensio-actif soluble/solvant de l'ordre de 20/80 à 50/50
   - de l'ordre de 40 à 80 g d'au moins un émulsifiant non-ionique et/ou anionique
   - et le complément à 1 l d'eau.

3. Procédé de préparation d'émulsions aqueuses concentrées de matières actives phytosanitaires à bas point de fusion par :
   - mise en solution d'au moins une matière active phytosanitaire de bas point de fusion dans un de ses solvants susceptible de maintenir celle-ci à l'état liquide après fusion
   - addition d'un agent tensio-actif éventuel soluble dans la matière active fondue et d'au moins un émulsifiant non-ionique et/ou anionique

- et introduction d'eau par fraction ou en continu à l'aide d'un système d'agitation énergique, les quantités relatives des différents composants étant les suivantes :
   - de l'ordre de 50 à 600 g de phase organique dispersée constituée de ladite matière active phytosanitaire de bas point de fusion, dudit solvant de la matière active susceptible de maintenir la matière active à l'état liquide après fusion, le rapport pondéral matière active/solvant étant de l'ordre de 95/5 à 60/40 et éventuellement dudit agent tensio-actif soluble dans la matière active fondue selon un rapport pondéral agent tensio-actif soluble/solvant de l'ordre de 0 à 1
   - de 20 à 120 g dudit émulsifiant non-ionique et/ou anionique
   - et le complément à 1 l d'eau.

4. Procédé selon la revendication 3, caractérisé en ce que les quantités relatives des différents constituants sont les suivantes :
   - de l'ordre de 100 à 600 g de phase organique dispersée constituée de ladite matière active phytosanitaire de bas point de fusion, dudit solvant de la matière active susceptible de maintenir la matière active à l'état liquide après fusion, le rapport pondéral matière active/solvant étant de l'ordre de 95/5 à 60/40 et dudit agent tensio-actif soluble dans la matière active fondue selon un rapport pondéral agent tensio-actif soluble/solvant de l'ordre de 20/80 à 50/50
   - de l'ordre de 40 à 80 g d'au moins un émulsifiant non-ionique et/ou anionique
   - et le complément à 1 l d'eau.

5. Emulsions aqueuses concentrées selon la revendication 1 ou 2 caractérisées en ce qu'elles comprennent en outre par litre d'émulsion :
   - de 8 à 200 g d'anti-gel
   - de 0 à 100 g d'agent mouillant
   - de 0 à 50 g d'épaississant.

**Revendications pour l'Etat contractant suivant : ES**

1. Emulsions aqueuses concentrées comprenant :
   - de l'ordre de 50 à 600 g d'une phase organique dispersée constituée d'au moins une matière active phytosanitaire de bas point de fusion, d'au moins un solvant de la matière active susceptible de maintenir la matière active à l'état liquide après fusion, le rapport pondéral matière active/solvant étant de l'ordre de 95/5 à 60/40 et éventuellement un agent tensio-actif soluble dans la matière active fondue selon un rapport pondéral agent tensio-actif soluble/solvant de l'ordre de 0 à 1
- de 20 à 120 g d'au moins un émulsifiant non-ionique et/ou anionique
- et le complément à 1 l d'eau.

2. Emulsions aqueuses concentrées selon la revendication 1 comprenant :
   - de l'ordre de 100 à 600 g d'une phase organique dispersée constituée d'au moins une matière active phytosanitaire de bas point de fusion, d'au moins un solvant de la matière active susceptible de maintenir la matière active à l'état liquide après fusion, le rapport pondéral matière active/solvant étant de l'ordre de 95/5 à 60/40 et un agent tensio-actif soluble dans la matière active fondue selon un rapport pondéral agent tensio-actif soluble/solvant de l'ordre de 20/80 à 50/50
   - de l'ordre de 40 à 80 g d'au moins un émulsifiant non-ionique et/ou anionique
   - et le complément à 1 l d'eau.

3. Procédé de préparation d'émulsions aqueuses concentrées de matières actives phytosanitaires à bas point de fusion par :
   - mise en solution d'au moins une matière active phytosanitaire de bas point de fusion dans un de ses solvants susceptible de maintenir celle-ci à l'état liquide après fusion
   - addition d'un agent tensio-actif éventuel soluble dans la matière active fondue et d'au moins un émulsifiant non-ionique et/ou anionique
   - et introduction d'eau par fraction ou en continu à l'aide d'un système d'agitation énergique, les quantités relatives des différents composants étant les suivantes :
   - de l'ordre de 50 à 600 g de phase organique dispersée constituée de ladite matière active phytosanitaire de bas point de fusion, dudit solvant de la matière active susceptible de maintenir la matière active à l'état liquide après fusion, le rapport pondéral matière active/solvant étant de l'ordre de 95/5 à 60/40 et éventuellement dudit agent tensio-actif soluble dans la matière active fondue selon un rapport pondéral agent tensio-actif soluble/solvant de l'ordre de 0 à 1
   - de 20 à 120 g dudit émulsifiant non-ionique et/ou anionique
   - et le complément à 1 l d'eau.

4. Procédé selon la revendication 3, caractérisé en ce que les quantités relatives des différents constituants sont les suivantes :
   - de l'ordre de 100 à 600 g de phase organique dispersée constituée de ladite matière active phytosanitaire de bas point de fusion, dudit solvant de la matière active susceptible de maintenir la matière active à l'état liquide après fusion, le rapport pondéral matière active/solvant étant de l'ordre de 95/5 à 60/40 et dudit agent tensio-actif soluble dans la matière active fondue selon un rapport pondéral agent tensio-actif soluble/solvant de l'ordre de 20/80 à 50/50
   - de l'ordre de 40 à 80 g d'au moins un émulsifiant non-ionique et/ou anionique
   - et le complément à 1 l d'eau.

5. Procédé selon l'une des revendications 1 ou 2, caractérisé en ce que l'on ajoute en outre par litre d'émulsion :
   - de 8 à 200 g d'anti-gel
   - de 0 à 100 g d'agent mouillant
   - de 0 à 50 g d'épaississant.

Office européen
des brevets

**RAPPORT DE RECHERCHE EUROPEENNE**

Numero de la demande

EP 90 42 0518

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 093 105 (MONSANTO) <br> * Page 2, lignes 8-17; page 3, lignes 25-30 * | 1-5 | A 01 N 25/04 |
| X | EP-A-0 118 759 (HOECHST) <br> * Page 9, lignes 1-29 * | 1-5 | |
| X | EP-A-0 131 735 (DEUTSCHE ITT) <br> * Exemple 9 * | 1-5 | |
| X | EP-A-0 342 134 (RHONE-POULENC AGROCHIMIE) <br> * Revendications 2,3,6; exemples 5-7,9,10 * | 1-5 | |
| X | DE-A-3 343 092 (BAYER) <br> * Revendication 1; page 9, lignes 4-15; page 11, lignes 22-30 * | 1-5 | |
| X | GB-A-1 023 863 (KIYOSHI SOTOME) <br> * Page 2, lignes 2-17,66-80 * | 1-5 | DOMAINES TECHNIQUES RECHERCHES (Int. Cl.5) |
| X | FR-A- 986 169 (SOCIETE BOMBRINI) <br> * Page 1, colonne de droite, dernier alinéa; page 2, colone de gauche * | 1-5 | A 01 N |

Le présent rapport a été établi pour toutes les revendications

| Lieu de la recherche | Date d'achèvement de la recherche | Examinateur |
|---|---|---|
| LA HAYE | 27-02-1991 | DECORTE D. |